# EUROPEAN PATENT SPECIFICATION

(11) **EP 3 287 509 B1**
(45) Date of publication and mention of the grant of the patent: **01.04.2020**
(21) Application number: 16880832.7
(22) Date of filing: 25.11.2016
(51) Int. Cl.: B01J 2/12, B01J 19/00, B01J 19/24, B01J 19/28, C10L 5/44

(54) **THREE-TANK TYPE AUTOMATIC PARTICLE PRODUCTION METHOD AND SYSTEM**
VERFAHREN UND SYSTEM ZUR AUTOMATISCHEN PARTIKELHERSTELLUNG VOM DREITANKTYP
PROCÉDÉ ET SYSTÈME AUTOMATIQUES DE PRODUCTION DE PARTICULES DU TYPE À TROIS CUVES

(30) Priority: 29.12.2015 CN 201511016865
(43) Date of publication of application: 28.02.2018
(73) Proprietor: Bai, Hongmei, Fo Tan Hong Kong N.T. (CN)
(72) Inventor: Bai, Hongmei, Fo Tan Hong Kong N.T. (CN)
(74) Representative: Michalski Hüttermann & Partner Patentanwälte mbB
(86) International application number: PCT/CN2016/107195
(87) International publication number: WO 2017/114042

(56) References cited:
- CA-A1- 2 833 179
- CN-A- 102 146 308
- CN-A- 105 132 068
- CN-A- 105 536 645
- GB-A- 1 561 029
- JP-A- 2012 183 528
- US-A1- 2003 221 363
- US-A1- 2014 082 998
- US-A1- 2014 202 073

## Description

### FIELD OF THE INVENTION

The present invention relates to the field of processing apparatuses of synthetic particle, and more particularly relates to a three-tank automated particle production method and system.

### BACKGROUND OF THE INVENTION

In the present global power stations, a requirement of the coal for the power generating boiler is extreme greater. However, when burning, the fossil fuel such as coal discharges a large quantity of gas which causes a greenhouse effect and a large quantity of dust which cannot eliminated. Therefore, a new green power "biofuel" is adopted to replace the fossil fuel such as the traditional coal. The biofuel is transferred from condensed residual waste plant fiber of plants in general or commercial crops, such as stalk, straw, weed tree, palm kernel shell, or coconut shell.

Conventional apparatuses for synthesizing particles are generally provided with conveying means, such as conveyor belts and the like, for feeding the material into a reactor to synthesize particles, and for transmitting the synthesized particles to a cooling tank for cooling. However, the conventional conveying means makes the structure of the apparatus very complicated, and renders a complex material transfer process, which makes the automatic preparation system of synthetic particles inefficient and increases the production cost. In addition, the produced synthetic particles have inconsistent color and appearance, and energy is not uniform.

JP2012183528 A discloses a concept for coating granules in three consecutive rotating drum chambers. After the material has been treated in one chamber, it is discharged into the next one by reversing rotational direction and delivering the material onto transfer members.

### SUMMARY OF THE INVENTION

Accordingly, it is necessary to provide a three-tank automated particle production method and system, which has a simple structure and high production efficiency.

A three-tank automated particle production method includes:
a feeding step: feeding material to be treated into a heating tank in batches during idle of the heating tank;
a heating step: heating and stirring the material in the heating tank under a preset heating temperature for a first preset time to obtain a first intermediate material; after obtaining the first intermediate material, connecting an outlet of the heating tank to an inlet of a baking tank, feeding the first intermediate material in the heating tank into the baking tank, and disengaging the outlet of the heating tank with the inlet of the baking tank;
a baking step: stirring the first intermediate material in the baking tank for a second preset time to obtain a second intermediate material; after obtaining the second intermediate material, connecting an outlet of the baking tank to an inlet of a cooling tank, feeding the second intermediate material in the baking tank into the cooling tank, and disengaging the outlet of the baking tank with the inlet of the cooling tank; and
a cooling step: stirring and cooling the second intermediate material in the cooling tank for a third preset time, and obtaining a final particle product and outputting.

A three-tank automated particle production system includes a heating tank, a baking tank, a cooling tank, an alignment device, and a control module electrically coupled to the heating tank, the baking tank, the cooling tank, the alignment device, respectively;
the control module is configured to send a feeding signal to the heating tank during idle of the heating tank, and feed material to be treated into the heating tank in batches;
the heating tank is configured to heat and stir the material in the heating tank under a preset heating temperature for a first preset time to obtain a first intermediate material;
after obtaining the first intermediate material, the control module is configured to send a first feeding signal to the alignment device and the baking tank, the alignment device is configured to connect an outlet of the heating tank to an inlet of a baking tank according to the first feeding signal, the baking tank is configured to receive the first intermediate material fed from the inlet according to the first feeding signal;
after the first intermediate material is fed, the control module is configured to send a first disengaging signal to the alignment device, the alignment device is configured to disengage the outlet of the heating tank with the inlet of the baking tank according to the first disengaging signal;
the baking tank is configured to stir the first intermediate material in the baking tank for a second preset time to obtain a second intermediate material;
after obtaining the second intermediate material, the control module is configured to send a second feeding signal to the alignment device and the cooling tank, the alignment device is configured to connect an outlet of the baking tank to an inlet of a cooling tank according to the second feeding signal, the cooling tank is configured to receive the second intermediate material fed from the inlet according to the second feeding signal;
after the second intermediate material is fed, the control module is configured to send a second disengaging signal to the alignment device, the alignment device is configured to disengage the outlet of the baking tank with the inlet of the cooling tank according to the second disengaging signal; and
the cooling tank is configured to stir and cool the second intermediate material in the cooling tank for a third preset time, and obtain a final particle product and output.

According to the three-tank automated particle production method and system provided by the present invention, the utilization rate of the baking tank per unit time is improved, the waiting time of the baking tank is reduced, thus accelerating the production efficiency of the synthetic particles and achieving the automatic generation of synthetic particles. In addition, the produced synthetic particles have consistent color and appearance, and uniform energy distribution.

### BRIEF DESCRIPTION OF THE DRAWINGS

FIG. 1 is a flowchart of a three-tank automated particle production method according to one embodiment of the present invention;
FIG. 2 is a perspective view of a heating device of a heating tank according to one embodiment of the present invention;
FIG. 3 is a perspective view of a heating tank according to one embodiment of the present invention;
FIG. 4 is a perspective view of a baking tank according to one embodiment of the present invention;
FIG. 5 is a perspective view of a cooling tank according to one embodiment of the present invention;
FIG. 6a and FIG. 6b are schematic views of two control structures of a three-tank automated particle production system according to one embodiment of the present invention;
FIG. 7 is a schematic view of a three-tank automated particle production system according to one embodiment of the present invention;
FIG. 8 is a schematic view of a three-tank automated particle production system according to one embodiment of the present invention; and
FIG. 9 is a schematic view of a strip-like member in the tank according to one embodiment of the present invention.

### DETAILED DESCRIPTION OF THE EMBODIMENTS

Embodiments of the invention are described more fully hereinafter with reference to the accompanying drawings, in which preferred embodiments of the invention are shown. The various embodiments of the invention may, however, be embodied in many different forms and should not be construed as limited to the embodiments set forth herein. Rather, these embodiments are provided so that this disclosure will be thorough and complete, and will fully convey the scope of the invention to those skilled in the art.

It will be understood that when an element is referred to as being "fixed to" to another element, it can be directly fixed to the other element or intervening elements may be present. When an element is referred to as being "connected" or "coupled" to another element, it can be directly connected or coupled to the other element or intervening elements may be present. The terminology "perpendicular", "horizontal", "left", "right" and similar expressions herein are for the purpose of illustration, and not for a unique implemented mode.

Unless otherwise defined, all terms used herein have the same meaning as commonly understood by one of ordinary skill in the art to which this invention belongs. Terms in the description of the connector are for the purpose of describing specific embodiments, and are not intend to limit the invention. As used herein, the term "and/or" includes any and all combinations of one or more of the associated listed items.

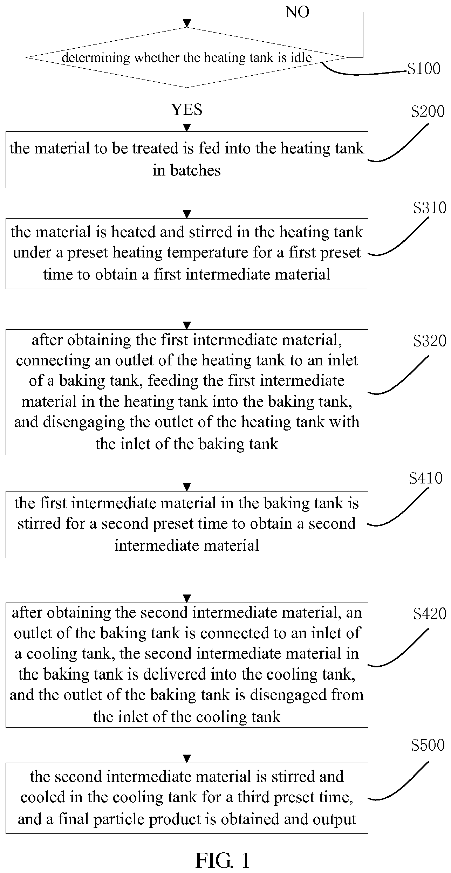

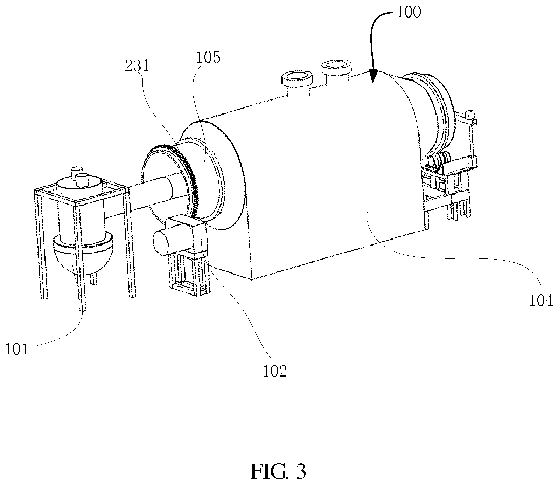

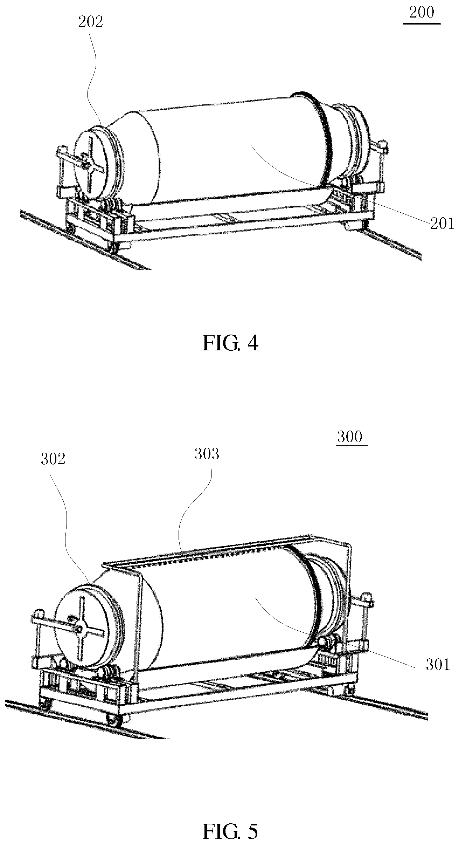

FIG. 1 illustrates a three-tank automated particle production method according to one embodiment of the present invention. FIGS. 3 to 5 illustrate a three-tank automated particle production system, which includes a heating tank 100, a baking tank 200, and a cooling tank 300. The three tanks can have the same structure, or different structures, and the three tanks can perform forward and reverse rotation. The material to be treated refers to wasted plant fiber of general plant or economic crops (such as stalk, straw, weed tree, palm kernel shell, or coconut shell, etc.).

Each tank has a cylindrical main structure, which has an inlet and an outlet. An automatic gate drive mechanism may be provided on the inlet and the outlet, which is controlled to close the inlet and the outlet. For example, the automatic gate drive mechanism employs a cylinder to push a swing arm. The free end of the swing arm is provided with a gate to close the inlet or the outlet. The swing arm is driven to work by pushing or pulling of the cylinder, such that the gate is attached to the inlet or outlet, or the gate is pull out from the inlet or the outlet.

In addition, each tank includes a driving mechanism, which is provided on the outside of the tank body and is engaged with the tank body through a gear disk. The driving mechanism can drive the tank body to perform forward or reverse rotation about its own axis, thus achieving stirring or feeding.

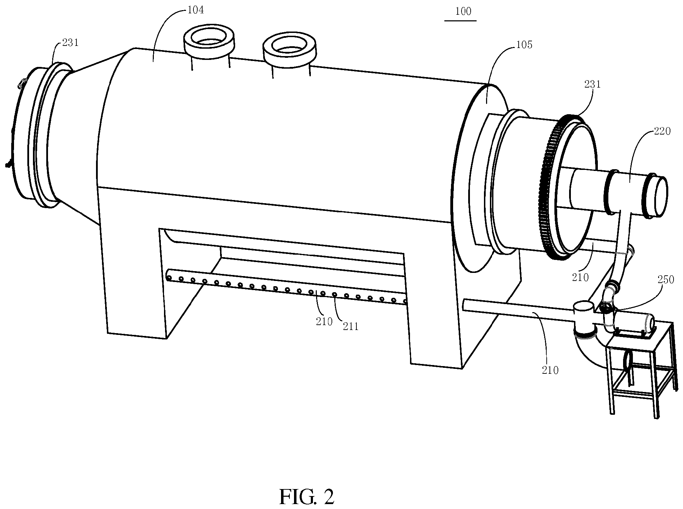

Moreover, on the basis of foregoing tank structure, referring to FIG. 3, the heating tank 100 serves as a reaction site for preparing the material into synthetic particles having high heat energy. A heating device 104 can be provided under the tank body 105, thus transforming an ordinary tank into the heating tank 100. For example, in one embodiment, referring to FIG. 2, the heating device 104 may include: at least one heat pipe 210, a main heat pipe 220, and a pneumatic valve 250. The heat pipe 210 defines a plurality of hot air entering holes 211 on a sidewall thereof facing heat source. The main heat pipe 220 is in communication with an interior of the tank body 105. The main heat pipe 220 is in communication with the heat pipe 210 to form a communication air path. The pneumatic valve 250 is located on the communication air path. The pneumatic valve 250 is configured to control the air pressure. When the pneumatic valve 250 detects that the air pressure in the communicating air path is too high, the pressure is then released. Accordingly, in the illustrated embodiment, the hot air near the heat source is sucked into the communicating air path through the heat pipe, and the hot air is introduced into the rotatable stirring tank through the main heat pipe, thereby achieving heating. The heating method can obtain more uniform heating, while it can dry wet materials in the stirring tank. The aforementioned heat source can be any equipment for producing high-temperature gas, such as a heating furnace. Additionally, the driving mechanism can be a driving motor 102 provided on the outside of the tank body 105, which is engaged with the tank body 105 through the gear disk 231. The driving motor 102 can drive the tank body 105 to perform forward or reverse rotation about its own axis, thus achieving stirring or feeding.

Furthermore, on the basis of foregoing tank structure, the baking tank 200 can use a conventional tank structure. In order to achieve the stirring function, the baking tank 200 can be rotated by the driving motor. Both ends of a tank body 201 of the baking tank 200 are provided with a gear disk 202 arranged in a circumferential direction. The gear disk 202 can be connected to the motor via a gear transmission mechanism. After electric driving, the tank body 201 is rotated about the axis line as a center line by the gear transmission mechanism, such that the material in the chamber of the mixing bucket can be stirred.

Furthermore, on the basis of foregoing tank structure, the cooling tank 300 is constructed by adding a cooling device 303 on an ordinary tank body, which is configured to decrease the temperature of the material in the tank body 301. For example, the cooling device 303 may be a water pipe and a water valve provided above the tank body 301. The water pipe is provided with a plurality of through holes, and cooling water runs in the water pipe. When cooling is required, the water valve is controlled to transfer the cooling water into the water pipe, the cooling water is then discharged from the plurality of through holes and drenches the tank body, thus achieving cooling to the materials in the tank body. Additionally, the driving mechanism can be a driving motor provided on the outside of the tank body 301, which is engaged with the tank body 301 through a gear disk 302. The driving motor can drive the tank body 301 to perform forward or reverse rotation about its own axis, thus achieving stirring or feeding.

Of course, the cooling tank and the heating tank can also be driven to rotate by a motor, of which the driving manner can be found in the description of the baking tank described above. Further, as shown in FIG. 3, the system further includes an automatic feeding device 101, which has a pipe connecting to an inner chamber of the heating tank 100.

In the embodiment illustrated in FIG. 1, a three-tank automated particle production method is disclosed, which includes the following steps:

In step S100, it is determined that whether the heating tank is idle or not. When the heating tank is idle, then step S200 is executed, i.e., the material to be treated is fed into the heating tank in batches. When the heating tank is not idle, then wait for instructions.

In a heating step, step S310 is executed, the material is heated and stirred in the heating tank under a preset heating temperature for a first preset time to obtain a first intermediate material. In one embodiment, in step S310, the preset heating temperature ranges from 200 °C to 350 °C, the first preset time is between one hour to three hours, such that the material can be more comprehensively reacted.

Step S320 is then executed, i.e., after obtaining the first intermediate material, connecting an outlet of the heating tank to an inlet of a baking tank, feeding the first intermediate material in the heating tank into the baking tank, and disengaging the outlet of the heating tank with the inlet of the baking tank.

In a baking step, step S410 is firstly executed, the first intermediate material in the baking tank is stirred for a second preset time to obtain a second intermediate material. The second preset time is greater than or equal to zero. In one embodiment, the second preset time is between one hour to two hours.

Step S420 is then executed, after obtaining the second intermediate material, an outlet of the baking tank is connected to an inlet of a cooling tank, the second intermediate material in the baking tank is fed into the cooling tank, and the outlet of the baking tank is disengaged from the inlet of the cooling tank.

In a cooling step S500, the second intermediate material is stirred and cooled in the cooling tank for a third preset time, and a final particle product is obtained and output. In one embodiment, in the cooling step S500, a cooling temperature of the cooling tank ranges from 50°C to 100°C; the third preset time is between one hour to two hours. The cooling method can be carried out in a manner as previously described.

In addition, in step S100, the processing time of the material can be monitored to determine whether the baking tank is idle. For instance, it is determined whether a predetermined time is reached, if so, it means the baking tank begins to idle; if not, then it means the baking tank is still working. Therefore, the predetermined time is greater than or equal to a sum of the first preset time and the execution time of step S320 described above.

Further, in order to make the cooperation of the three tanks more orderly, and achieve a more comprehensive material reaction, in one embodiment, the first preset time is greater than or equal to the second preset time, the second preset time is greater than or equal to zero, or the second preset time is greater than or equal to the third preset time.

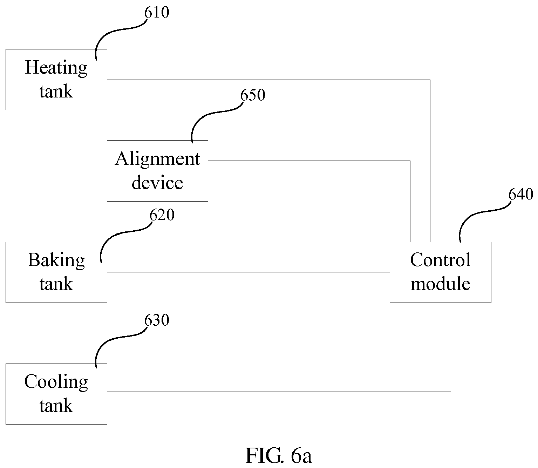

In order to implement the above-mentioned method, in one embodiment, as shown in FIG. 6a, the present invention also provides a three-tank automated particle production system, which includes: a heating tank 610, a baking tank 620, a cooling tank 630, an alignment device 650, and a control module 640 electrically coupled to the heating tank 610, the baking tank 620, the cooling tank 630, the alignment device 650, respectively.

The control module 640 is configured to send a feeding signal to the heating tank 610 during idle of the heating tank 610, and controls to feed material to be treated into the heating tank 610 in batches.

The heating tank 610 is configured to heat and stir the material in the heating tank 610 under a preset heating temperature for a first preset time to obtain a first intermediate material.

After obtaining the first intermediate material, the control module 640 is configured to send a first feeding signal to the alignment device 650 and the baking tank 620, the alignment device 650 is configured to connect an outlet of the heating tank 610 to an inlet of a baking tank 620 according to the first feeding signal, the baking tank 620 is configured to receive the first intermediate material fed from the inlet according to the first feeding signal.

After the first intermediate material is fed, the control module 640 is configured to send a first disengaging signal to the alignment device 650, the alignment device 650 is configured to disengage the outlet of the heating tank 610 with the inlet of the baking tank 620 according to the first disengaging signal.

The baking tank 620 is configured to stir the first intermediate material in the baking tank 620 for a second preset time to obtain a second intermediate material.

After obtaining the second intermediate material, the control module 640 is configured to send a second feeding signal to the alignment device 650 and the cooling tank 630, the alignment device 650 is configured to connect an outlet of the baking tank 620 to an inlet of a cooling tank 630 according to the second feeding signal, the cooling tank 630 is configured to receive the second intermediate material fed from the inlet according to the second feeding signal.

After the second intermediate material is fed, the control module 640 is configured to send a second disengaging signal to the alignment device 650, the alignment device 650 is configured to disengage the outlet of the baking tank 620 with the inlet of the cooling tank 630 according to the second disengaging signal.

The cooling tank 630 is configured to stir and cool the second intermediate material in the cooling tank 630 for a third preset time, and obtain a final particle product and output.

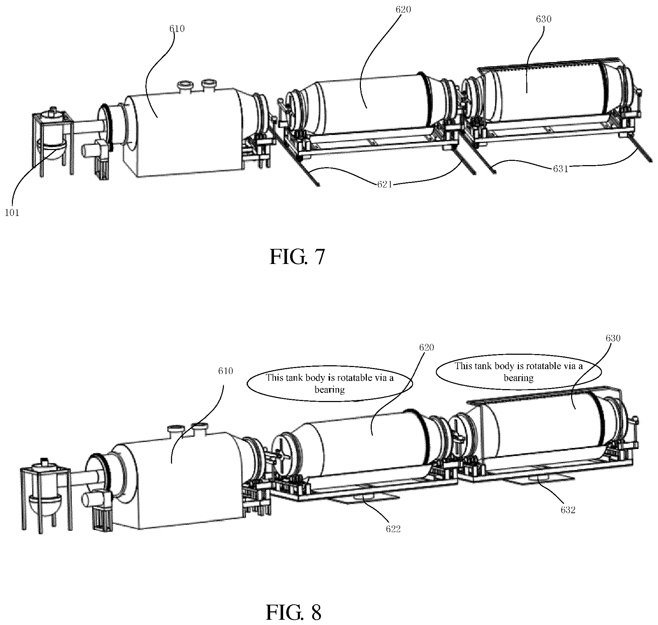

Referring to FIG. 3 and FIG. 7, according to one embodiment of the present invention, a feeding device 101 is connected to a heating tank (100 or 610). The feeding device 101 is configured to store the material to be treated. When the heating tank 610 is idle, the control module 640 may send a feed signal to the feeding device 101 and the heating tank 610, and controls the feeding device 101 to feed the material to be treated into the heating tank 610 in batches.

After receiving the feeding signal, the heating tank 610 open the inlet. Similarly, after the baking tank 620 receives the first feeding signal, the inlet is opened, then the second intermediate material can be received from the inlet. After the cooling tank 630 receives the second feeding signal, the inlet is opened, then the second intermediate material can be received from the inlet. The inlet and the outlet of each tank will be closed before rotation and stirring.

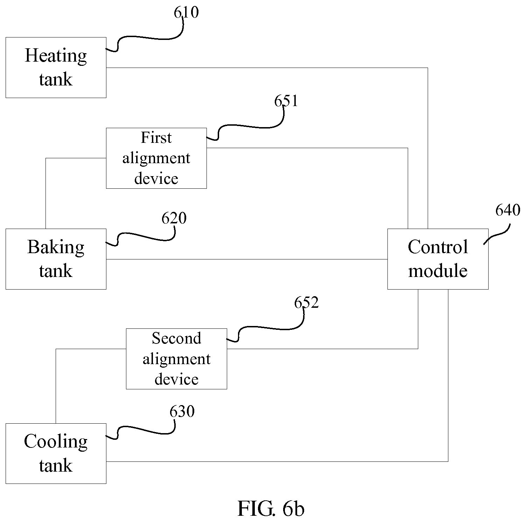

Referring to FIG. 6b, in one embodiment, the alignment device may include two separated alignment devices, such as a first alignment device 651 and a second alignment device 652. Compared with the embodiment shown in FIG. 6a, the differences are that, after obtaining the first intermediate material, the control module 640 is configured to send a first feeding signal to the first alignment device 651 and the baking tank 610, the first alignment device 651 is configured to connect an outlet of the heating tank to an inlet of a baking tank according to the first feeding signal, the baking tank is configured to receive the first intermediate material fed from the inlet.

After the second intermediate material is fed, the control module 640 is configured to send a first disengaging signal to the first alignment device 651, the first alignment device 651 is configured to disengage the outlet of the baking tank with the inlet of the cooling tank according to the second disengaging signal.

After obtaining the second intermediate material, the control module 640 is configured to send a second feeding signal to the second alignment device 652 and the cooling tank 630, the second alignment device 652 is configured to connect an outlet of the baking tank 620 to an inlet of a cooling tank 630 according to the second feeding signal, the cooling tank 630 is configured to receive the second intermediate material fed from the inlet.

After the second intermediate material is fed, the control module 640 is configured to send a second disengaging signal to the second alignment device 652, the second alignment device 652 is configured to disengage the outlet of the baking tank 620 with the inlet of the cooling tank 630 according to the second disengaging signal.

In one embodiment, the control module 640 may determine whether the heating tank is idle by monitoring the processing time of the material. For instance, it is determined whether a predetermined time is reached, if so, it means the baking tank begins to idle, if not, then it means the baking tank is still working. Therefore, the predetermined time is greater than or equal to a sum of the first preset time and a time for completing the process of connecting the outlet of the heating tank to the inlet of the baking tank and disengaging the outlet of the heating tank with the inlet of the baking tank.

In the above-described embodiment, the detailed description of each of the above-described respective execution units can be referred to the detailed description of the respective steps in FIG. 1, and will not be described here.

In one embodiment, as shown in FIG. 7, on the basis of the embodiment shown in FIG. 6a, the alignment device can includes:
a first rail 621 laid beneath the baking tank 620, the baking tank 620 is movable along the first rail 621, and
a first motion driver (not shown) mounted on the baking tank 620. After receiving the first or the second feeding signal sent from the control module 640, the first motion driver drives the baking tank 620 to move along the first rail 621 towards the heating tank 610 or move towards the cooling tank to achieve connection. After receiving the first or the second disengaging signal sent from the control module 640, the first motion driver drives the baking tank 620 to move along the first rail 621 away from the heating tank 610 or move away from the cooling tank to achieve disengagement.

For example, according to the first feeding signal, the first motion driver drives the baking tank 620 to move along the first rail 621 towards the heating tank 610 to achieve connection, and according to the first disengaging signal, the first motion driver drives the baking tank 620 to move along the first rail 621 away from the heating tank 610 to achieve disengagement.

According to the second feeding signal, the first motion driver drives the baking tank 620 to move along the first rail 621 towards the cooling tank 630 to achieve connection, and according to the second disengaging signal, the first motion driver drives the baking tank 620 to move along the first rail 621 away from the cooling tank 630 to achieve disengagement. Referring to FIG. 7, the heating tank 610, the baking tank 620, and the cooling tank 630 can be ranged along a line, so as to achieve the shortest displacement when moving, thus saving material delivery time. It should be noted that they may not be arranged along a line.

Of course, according to alternative embodiment, referring to FIG. 8, on the basis of the embodiment shown in FIG. 6a, the alignment device can further include:
a first rotary bearing 622 mounted vertically below the baking tank 620, driven by the first rotary bearing 622, the baking tank 620 is capable of rotating horizontally about a center line perpendicular to a horizontal plane, and
a first rotary driver (not shown) mounted on the baking tank 620. After receiving the first or the second feeding signal sent from the control module 640, the first rotary driver drives the baking tank 620 to rotate about the center line perpendicular to the horizontal plane, thereby connecting the baking tank 620 to the heating tank 610 or cooling tank 630, which is located on a rotating circumference of the baking tank 620. After receiving the first or the second disengaging signal sent from the control module 640, the first rotary driver drives the baking tank 620 to rotate about the center line perpendicular to the horizontal plane, thereby disengaging the baking tank 620 from the heating tank 610 or cooling tank 630, which is located on a rotating circumference of the baking tank.

For example, according to the first feeding signal, the first motion driver drives the baking tank 620 to rotate about its own center line to connect the heating tank 610, and according to the second feeding signal, the first motion driver drives the baking tank 620 to rotate about its own center line to connect the cooling tank 630.

According to the first disengaging signal, the first motion driver drives the baking tank 620 to rotate about its own center line to disengage from the outlet of the heating tank 610, and according to the second disengaging signal, the first motion driver drives the baking tank 620 to rotate about its own center line to disengage from the inlet of the cooling tank 630.

Besides the configuration manner of the two alignment devices described above, as shown in FIG. 6b, the alignment device can be divided into two separated first and second alignment devices for more flexible connecting and separation adjustment, which allows for more precise operation on the connecting and separation implementations.

Referring to FIG. 7, in one embodiment, the alignment device includes a first alignment device 651 and second alignment device 652. The first alignment device 651 includes a first rail 621 and a first motion driver (not shown).

The first rail 621 is laid below the baking tank 620, which can move along the first rail 621. The first motion driver is mounted on the baking tank 620. After receiving the first feeding signal sent from the control module 640, the first motion driver drives the baking tank 620 to move along the first rail 621 towards the heating tank 610 to achieve connection. After receiving the first disengaging signal sent from the control module 640, the first motion driver drives the baking tank 620 to move along the first rail 621 away from the heating tank 610 to achieve disengagement.

The second alignment device 652 includes a second rail 631 and a second motion driver (not shown).

The second rail 631 is laid below the cooling tank 630, which can move along the second rail 631. The second motion driver is mounted on the cooling tank 630. After receiving the second feeding signal sent from the control module 640, the first motion driver drives the cooling tank 630 to move along the second rail 631 towards the baking tank 620 to achieve connection. After receiving the second disengaging signal sent from the control module 640, the second motion driver drives the cooling tank 630 to move along the second rail 631 away from the baking tank 620 to achieve disengagement of the cooling tank and the baking tank.

As shown in FIG. 7, in the illustrated embodiment, the heating tank 610, the baking tank 620, and the cooling tank 630 can be ranged along a line, so as to achieve the shortest displacement when moving, thus saving material delivery time. It should be noted that they may not be arranged along a line.

Referring to FIG. 8, in alternative embodiment, the alignment device includes a first alignment device 651 and second alignment device 652. The first alignment device 651 includes a first rotary bearing 622 and a first rotary driver (not shown).

The first rotary bearing 622 is mounted vertically below the baking tank 620, driven by the first rotary bearing 622, the baking tank 620 is capable of rotating horizontally about a center line perpendicular to a horizontal plane. The first rotary driver is mounted on the baking tank 620. After receiving the first feeding signal sent from the control module 640, the first rotary driver drives the baking tank 620 to rotate about the center line perpendicular to the horizontal plane, thereby connecting the baking tank 620 to the heating tank 610, which is located on a rotating circumference of the baking tank 620. After receiving the first disengaging signal sent from the control module 640, the first rotary driver drives the baking tank 620 to rotate about the center line perpendicular to the horizontal plane, thereby disengaging the baking tank 620 from the heating tank 610, which is located on a rotating circumference of the baking tank.

The second alignment device 652 includes a second rotary bearing 632 and a second rotary driver (not shown).

The second rotary bearing 632 is mounted vertically below the cooling tank 630, driven by the second rotary bearing 632, the cooling tank 630 is capable of rotating horizontally about a center line perpendicular to a horizontal plane. The second rotary driver is mounted on the cooling tank 630. After receiving the second feeding signal sent from the control module 640, the second rotary driver drives the cooling tank 630 to rotate about the center line perpendicular to the horizontal plane, thereby connecting the cooling tank 630 to the baking tank 620, which is located on a rotating circumference of the cooling tank 630. After receiving the second disengaging signal sent from the control module 640, the second rotary driver drives the cooling tank 630 to rotate about the center line perpendicular to the horizontal plane, thereby disengaging the cooling tank 630 from the baking 620, which is located on a rotating circumference of the cooling tank 630.

The first and second rotary bearings of the forgoing embodiment can be a device with a base and a rotating shaft. One end of the rotating shaft is fixed to the tank body, and the other end of the rotating shaft is connected to the first rotary driver or the second rotary driver. The rotating shaft is arranged perpendicular to the horizontal plane. The first rotary drive or the second rotary drive may be a drive motor, such as a stepper motor. The drive motor drives the rotation shaft to rotate, so as to drive the tank body to rotate about the center line perpendicular to the horizontal plane.

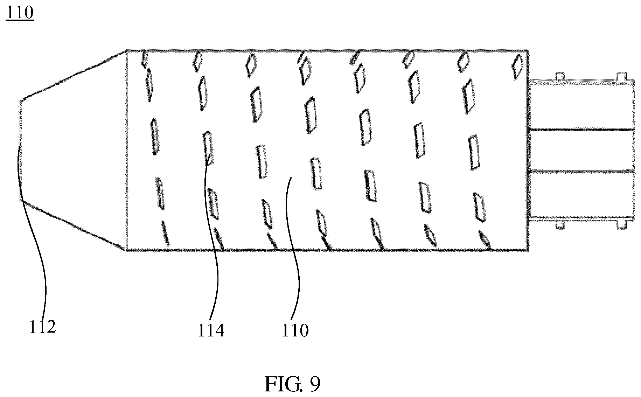

Referring to FIG. 9, according to one embodiment of the present invention, regardless the heating tank, the baking tank or the cooling tank, a plurality of spaced apart strip-like members 114 are fixed on inner wall of the tank body 110. Each strip-like member 114 extends helically from one end to the other end of the tank body 110. Each strip-like member 114 forms a constant angle with an axis of the tank body 110. When the tank body 110 rotates, the strip-like member 114 rotates along with the tank body 110 and generates an airflow blowing towards the interior of the tank body 110, thus preparing the material entered from the inlet 112 into the synthetic particles. When the processing to the material is completed, the tank body 110 is rotated in a reverse direction, the strip-like member 114 reversely rotates along with the tank body 110 and generates an airflow blowing towards the exterior of the tank body 110, thus the processed synthetic particles are output from the inlet 112, which serves as the outlet. It should be noted that, the preparation and the output of the synthetic particles are not limited herein. For instance, the interior of the tank body 110 can be provided with strip-like protrusions to prepare the synthetic particles. An outlet can be provided on one side of the tank body 110 away from the inlet 112 to output the synthetic particles.

According to the foregoing three-tank automated particle production system, the baking tank 200 is added to the conventional two-tank system, such that the utilization efficiency of the heating tank per unit time can be increased. When the material from the heating tank 100 is transferred to the baking tank 200, the heating tank 100 can be reactivated immediately to continue processing of the next batch of material, and the added material can be heated by the residual heat of the heating tank 100. By adopting the method of the invention, the heating tank 100 is maintained in working state, such that the temperature is not greatly reduced, the energy loss is reduced, the waiting time of the baking box is shortened and the utilization rate of the unit time is improved. Similarly, after the transferring of materials in the baking tank, the reaction time of the material during the stirring process can be extended, and the temperature drops gradually, thus when the material is sent to the cooling tank, it can use as little cooling water as possible to complete cooling of the material. The orderly work of the overall processing equipments can enhance the processing speed of synthetic particles.

Technical features of above embodiments can be combined arbitrary, for simple, any combination of every technical feature in above embodiments is not fully illustrated. However, the technical features which are not contradicted to each other may fall into the scope of the specification.

The foregoing descriptions are merely specific embodiments of the present invention, but are not intended to limit the protection scope of the present invention. Any variation or replacement readily figured out by a person skilled in the art within the technical scope disclosed in the present invention shall all fall within the protection scope of the present invention. Therefore, the protection scope of the present invention shall be subject to the protection scope of the appended claims.

## Claims

1. A three-tank automatic particle production method, comprising:
feeding material to be treated into a heating tank (100, 610) in batches; heating and stirring the material in the heating tank under a preset heating temperature for a first preset time to obtain a first intermediate material; after obtaining the first intermediate material, connecting an outlet of the heating tank to an inlet of a baking tank, feeding the first intermediate material in the heating tank into the baking tank, and disengaging the outlet of the heating tank with the inlet of the baking tank;
stirring the first intermediate material in the baking tank (200, 620) for a second preset time to
obtain a second intermediate material; after obtaining the second intermediate material, connecting an outlet of the baking tank to an inlet of a cooling tank (300, 630), feeding the second
intermediate material in the baking tank into the cooling tank, and disengaging the outlet of the baking tank with the inlet of the cooling tank; and
stirring and cooling the second intermediate material in the cooling tank for a third preset time, and obtaining a final particle product and outputting.

2. The method according to claim 1, wherein the preset heating temperature ranges from 200 °C to 350 °C; the first preset time is between one hour to three hours.

3. The method according to claim 1, wherein a cooling temperature of the cooling tank ranges from 50°C to 100°C; the third preset time is between one hour to two hours.

4. The method according to claim 1, wherein the second preset time is between one hour to two hours.

5. The method according to claim 1, wherein the first preset time is greater than or equal to the second preset time, the second preset time is greater than or equal to zero, or the second preset time is greater than or equal to the third preset time.

6. The method according to claim 1, wherein in the feeding step, the material to be treated is fed into the heating tank in batches every predetermined time, the predetermined time is greater than or equal to a sum of the first preset time and a time for completing the process of connecting the outlet of the heating tank to the inlet of the baking tank and disengaging the outlet of the heating tank with the inlet of the baking tank.

7. A three-tank automatic particle production system, comprising a heating tank (100, 610), a baking tank (200, 620), a cooling tank (300, 630), an alignment device (650), and a control module (640) electrically coupled to the heating tank, the baking tank, the cooling tank, the alignment device, respectively; the control module is configured to send a feeding signal to the heating tank during idle of the heating tank, and feed material to be treated into the heating tank in batches;
the heating tank is configured to heat and stir the material in the heating tank under a preset heating temperature for a first preset time to obtain a first intermediate material; after obtaining the first intermediate material, the control module is configured to send a first feeding signal to the alignment device and the baking tank, the alignment device is configured to connect an outlet of the heating tank to an inlet of a baking tank according to the first feeding signal, the baking tank is configured to receive the first intermediate material fed from the inlet according to the first feeding signal;
after the first intermediate material is fed, the control module is configured to send a first disengaging signal to the alignment device, the alignment device is configured to disengage the outlet of the heating tank with the inlet of the baking tank according to the first disengaging signal;
the baking tank is configured to stir the first intermediate material in the baking tank for a second preset time to obtain a second intermediate material;
after obtaining the second intermediate material, the control module is configured to send a second feeding signal to the alignment device and the cooling tank, the alignment device is configured to connect an outlet of the baking tank to an inlet of a cooling tank according to the second feeding signal, the cooling tank is configured to receive the second intermediate material fed from the inlet according to the second feeding signal; after the second intermediate material is fed, the control module is configured to send a second disengaging signal to the alignment device, the alignment device is configured to disengage the outlet of the baking tank with the inlet of the cooling tank according to the second disengaging signal; and
the cooling tank is configured to stir and cool the second intermediate material in the cooling tank for a third preset time, and obtain a final particle product and output.

8. The system according to claim 7, wherein the control module sends the feed signal every predetermined time, the predetermined time is greater than or equal to a sum of the first preset time and a time for completing the process of connecting the outlet of the heating tank to the inlet of the baking tank and disengaging the outlet of the heating tank with the inlet of the baking tank.

9. The system according to claim 7, wherein the alignment device (640) comprises:
a first rail (621) laid beneath the baking tank, the baking tank being movable along the first rail;
and
a first motion driver mounted on the baking tank, after receiving the first or the second feeding signal sent from the control module, the first motion driver drives the baking tank to move along the first rail towards the heating tank or move towards the cooling tank to achieve connection; after receiving the first or the second disengaging signal sent from the control module, the first motion driver drives the baking tank to move along the first rail away from the heating tank or move away from the cooling tank to achieve disengagement.

10. The system according to claim 7, wherein the alignment device comprises:
a first rotary bearing (622) mounted vertically below the baking tank, driven by the first rotary bearing, the baking tank is capable of rotating horizontally about a center line perpendicular to a horizontal plane, and
a first rotary driver mounted on the baking tank, after receiving the first or the second feeding signal sent from the control module, the first rotary driver drives the baking tank to rotate about the center line perpendicular to the horizontal plane, thereby connecting the baking tank to the heating tank or cooling tank, which is located on a rotating circumference of the baking tank; after receiving the first or the second disengaging signal sent from the control module, the first rotary driver drives the baking tank to rotate about the center line perpendicular to the horizontal plane, thereby disengaging the baking tank from the heating tank or cooling tank, which is located on a rotating circumference of the baking tank.

11. The system according to claim 9, wherein the alignment device further comprises:
a second rail (631) laid beneath the cooling tank, the cooling tank being movable along the second rail; and
a second motion driver mounted on the cooling tank, after receiving the second feeding signal sent from the control module, the second motion driver drives the cooling tank to move along the second rail towards the baking tank or away from the baking tank to achieve connection between the cooling tank and the baking tank; after receiving the second disengaging signal sent from the control module, the second motion driver drives the cooling tank to move along the second rail away from the baking tank to achieve disengagement of the cooling tank and the baking tank.

12. The system according to claim 9, wherein the alignment device further comprises:
a second rotary bearing (632) mounted vertically below the cooling tank, driven by the rotary bearing, the cooling tank is capable of rotating horizontally about a center line perpendicular to a horizontal plane, and
a second rotary driver mounted on the cooling tank, after receiving the second feeding signal sent from the control module, the second rotary driver drives the cooling tank to rotate about the center line perpendicular to the horizontal plane, thereby connecting the cooling tank to the baking tank or cooling tank, which is located on a rotating circumference of the cooling tank; after receiving the second disengaging signal sent from the control module, the second rotary driver drives the cooling tank to rotate about the center line perpendicular to the horizontal plane, thereby disengaging the cooling tank from the baking tank, which is located on a rotating circumference of the cooling tank.

## Patentansprüche

1. Automatisches Partikelproduktionsverfahren mit drei Tanks, mit den Schritten:
chargenweises Zuführen von zu behandelndem Material in einen Heiztank (100, 610);
Erwärmen und Rühren des Materials im Heiztank unter einer voreingestellten Heiztemperatur für eine erste voreingestellte Zeit, um ein erstes Zwischenmaterial zu erhalten;
Verbinden eines Auslasses des Heiztanks mit einem Einlass eines Backtanks, nachdem das erste Zwischenmaterial erhalten wurde;
Zuführen des ersten Zwischenmaterials im Heiztank zum Backtank; und
Lösen der Verbindung zwischen dem Auslass des Heiztanks und dem Einlass des Backtanks;
Rühren des ersten Zwischenmaterials im Backtank (200, 620) für eine zweite voreingestellte Zeit, um ein zweites Zwischenmaterial zu erhalten;
Verbinden eines Auslasses des Backtanks mit einem Einlass eines Kühltanks (300, 630), nachdem das zweite Zwischenmaterial erhalten wurde;
Zuführen des zweiten Zwischenmaterials im Backtank zum Kühltank und Lösen der Verbindung zwischen dem Auslass des Backtanks und dem Einlass des Kühltanks; und
Rühren und Kühlen des zweiten Zwischenmaterials im Kühltank für eine dritte voreingestellte Zeit und Erhalten und Ausgeben eines fertigen Partikelprodukts.

2. Verfahren nach Anspruch 1, wobei
die voreingestellte Heiztemperatur im Bereich von 200°C bis 350°C liegt, und
die erste voreingestellte Zeit zwischen einer Stunde und drei Stunden beträgt.

3. Verfahren nach Anspruch 1, wobei
eine Kühltemperatur des Kühltanks im Bereich von 50°C bis 100°C liegt, und
die dritte voreingestellte Zeit zwischen einer Stunde und zwei Stunden beträgt.

4. Verfahren nach Anspruch 1, wobei die zweite voreingestellte Zeit zwischen einer Stunde und zwei Stunden beträgt.

5. Verfahren nach Anspruch 1, wobei die erste voreingestellte Zeit größer oder gleich der zweiten voreingestellten Zeit ist, die zweite voreingestellte Zeit größer oder gleich Null oder die zweite voreingestellte Zeit größer oder gleich der dritten voreingestellten Zeit ist.

6. Verfahren nach Anspruch 1, wobei im Zufuhrschritt das zu behandelnde Material jeweils zu einer vorgegeben Zeit chargenweise dem Heiztank zugeführt wird, wobei die vorgegebene Zeit größer oder gleich einer Summe aus der ersten vorgegebenen Zeit und einer Zeit ist, in der der Prozess zum Verbinden des Auslasses des Heiztanks mit dem Einlass des Backtanks und zum Lösen der Verbindung zwischen dem Auslass des Heiztanks und dem Einlass des Backtanks abgeschlossen ist.

7. Automatisches Partikelherstellungssystem mit drei Tanks, mit einem Heiztank (100, 610), einem Backtank (200, 620), einem Kühltank (300, 630), einer Ausrichtungseinrichtung (650) und einem Steuermodul (640), das elektrisch mit dem Heiztank, dem Backtank, dem Kühltank bzw. der Ausrichtungseinrichtung verbunden ist,
wobei das Steuermodul dafür konfiguriert ist, in einem Leerlauf des Heiztanks ein Zufuhrsignal an den Heiztank zu übertragen und chargenweise zu behandelndes Material in den Heiztank zuzuführen,
der Heiztank dafür konfiguriert ist, das Material im Heiztank unter einer voreingestellten Heiztemperatur für eine erste voreingestellte Zeit zu erwärmen und zu rühren, um ein erstes Zwischenmaterial zu erhalten,
nach Erhalt des ersten Zwischenmaterials das Steuermodul dafür konfiguriert ist, ein erstes Zufuhrsignal an die Ausrichtungseinrichtung und den Backtank zu übertragen, wobei die Ausrichtungseinrichtung dafür konfiguriert ist, gemäß dem ersten Zufuhrsignal einen Auslass des Heiztanks mit einem Einlass eines Backtanks zu verbinden, wobei der Backtank dafür konfiguriert ist, das vom Einlass zugeführte erste Zwischenmaterial gemäß dem ersten Zufuhrsignal zu empfangen,
das Steuermodul dafür konfiguriert ist, nachdem das erste Zwischenmaterial zugeführt wurde, ein erstes Verbindungsunterbrechungssignal an die Ausrichtungseinrichtung zu übertragen, wobei die Ausrichtungseinrichtung dafür konfiguriert ist, die Verbindung zwischen dem Auslass des Heiztanks und dem Einlass des Backtanks gemäß dem ersten Verbindungsunterbrechungssignal zu lösen.
der Backtank dafür konfiguriert ist, das erste Zwischenmaterial im Backtank für eine zweite voreingestellte Zeit zu rühren, um ein zweites Zwischenmaterial zu erhalten.
das Steuermodul dafür konfiguriert ist, nachdem das zweite Zwischenmaterial erhalten wurde, ein zweites Zufuhrsignal an die Ausrichtungseinrichtung und den Kühltank zu übertragen, wobei die Ausrichtungseinrichtung dafür konfiguriert ist, gemäß dem zweiten Zufuhrsignal einen Auslass des Backtanks mit einem Einlass eines Kühltanks zu verbinden, wobei der Kühltank dafür konfiguriert ist, das vom Einlass zugeführte zweite Zwischenmaterial gemäß dem zweiten Zufuhrsignal zu empfangen,
das Steuermodul dafür konfiguriert ist, nachdem das zweite Zwischenmaterial zugeführt wurde, ein zweites Verbindungsunterbrechungssignal an die Ausrichtungseinrichtung zu übertragen, wobei die Ausrichtungseinrichtung dafür konfiguriert ist, die Verbindung zwischen dem Auslass des Backtanks und dem Einlass des Kühltanks gemäß dem zweiten Verbindungsunterbrechungssignal zu unterbrechen, und
der Kühltank dafür konfiguriert ist, das zweite Zwischenmaterial im Kühltank für eine dritte voreingestellte Zeit zu rühren und zu kühlen und ein fertiges Partikelprodukt zu erhalten und auszugeben.

8. System nach Anspruch 7, wobei das Steuermodul das Zufuhrsignal jeweils zu einer vorgegebenen Zeit überträgt, wobei die vorgegebene Zeit größer oder gleich einer Summe aus der ersten voreingestellten Zeit und einer Zeit ist, bis der Prozess zum Verbinden des Auslasses des Heiztanks mit dem Einlass des Backtanks und zum Unterbrechen der Verbindung zwischen dem Auslass des Heiztanks und dem Einlass des Backtanks abgeschlossen ist.

9. System nach Anspruch 7, wobei die Ausrichtungseinrichtung (640) aufweist:
eine erste Schiene (621), die unterhalb des Backtanks verlegt ist, wobei der Backtank entlang der ersten Schiene bewegbar ist; und
eine erste Antriebseinrichtung, die am Backtank montiert ist, wobei die Antriebseinrichtung
nach dem Empfang des vom Steuermodul übertragenen ersten oder zweiten Zufuhrsignals den Backtank derart antreibt, dass er entlang der ersten Schiene in Richtung zum Heiztank oder in Richtung zum Kühltank bewegt wird, um eine Verbindung herzustellen,
nach dem Empfang des vom Steuermodul übertragenen ersten oder zweiten Verbindungsunterbrechungssignals die erste Antriebseinrichtung den Backtank derart antreibt, dass er sich entlang der ersten Schiene vom Heiztank weg oder vom Kühltank weg bewegt, um die Verbindung zu unterbrechen.

10. System nach Anspruch 7, wobei die Ausrichtungseinrichtung aufweist:
ein erstes Drehlager (622), das vertikal unterhalb des Backtanks montiert ist, der durch das erste Drehlager angetrieben wird, wobei der Backtank dazu eingerichtet ist, sich horizontal um eine Mittellinie senkrecht zu einer horizontalen Ebene zu drehen; und
eine erste Drehantriebseinrichtung, die am Backtank montiert ist, wobei die erste Drehantriebseinrichtung nach dem Empfang des vom Steuermodul übertragenen ersten oder zweiten Zufuhrsignals den Backtank derart antreibt, dass er sich um die Mittellinie senkrecht zur horizontalen Ebene dreht, um den Backtank mit dem Heiztank oder mit dem Kühltank zu verbinden, der sich auf einem Drehumfang des Backtanks befindet,
die erste Drehantriebseinrichtung nach dem Empfang des vom Steuermodul übertragenen ersten oder zweiten Verbindungsunterbrechungssignals den Backtank derart antreibt, dass er sich um die Mittellinie senkrecht zur horizontalen Ebene dreht, um die Verbindung zwischen dem Backtank und dem Heiztank oder dem Kühltank zu unterbrechen, der sich auf einem Drehumfang des Backtanks befindet.

11. System nach Anspruch 9, wobei die Ausrichtungseinrichtung ferner aufweist:
eine zweite Schiene (631), die unter dem Kühltank verlegt ist, wobei der Kühltank entlang der zweiten Schiene bewegbar ist; und
eine zweite Antriebseinrichtung, die am Kühltank montiert ist, wobei die zweite Antriebseinrichtung, nach dem Empfang des vom Steuermodul übertragenen zweiten Zufuhrsignals den Kühltank derart antreibt, dass er sich entlang der zweiten Schiene in Richtung zum Backtank oder vom Backtank weg bewegt, um eine Verbindung zwischen dem Kühltank und dem Backtank herzustellen,
die zweite Antriebseinrichtung nach dem Empfang des vom Steuermodul übertragenen zweiten Verbindungsunterbrechungssignals den Kühltank derart antreibt, dass er sich entlang der zweiten Schiene vom Backtank weg bewegt, um die Verbindung zwischen dem Kühltank und dem Backtank zu unterbrechen.

12. System nach Anspruch 9, wobei die Ausrichtungseinrichtung ferner aufweist:
ein zweites Drehlager (632), das vertikal unter dem Kühltank montiert ist, der durch das Drehlager angetrieben wird, wobei der Kühltank dazu eingerichtet ist, sich horizontal um eine Mittellinie senkrecht zu einer horizontalen Ebene zu drehen; und
eine zweite Drehantriebseinrichtung, die am Kühltank montiert ist, wobei die zweite Drehantriebseinrichtung nach dem Empfang des vom Steuermodul übertragenen zweiten Zufuhrsignals den Kühltank derart antreibt, dass er sich um die Mittellinie senkrecht zur horizontalen Ebene dreht, wodurch der Kühltank mit dem Backtank verbunden wird, der sich auf einem Drehumfang des Kühltanks befindet, wobei die zweite Drehantriebseinrichtung nach dem Empfang des vom Steuermodul übertragenen zweiten Verbindungsunterbrechungssignals den Kühltank derart antreibt, dass er sich um die Mittellinie senkrecht zur horizontalen Ebene dreht, wodurch die Verbindung zwischen dem Kühltank und dem Backtank unterbrochen wird, der sich auf einem Drehumfang des Kühltanks befindet.

## Revendications

1. Procédé de production automatique de particules à trois réservoirs, comprenant :
l'alimentation de matériau à traiter dans un réservoir chauffant (10, 610) par lots ;
le chauffage et l'agitation du matériau dans le réservoir chauffant à une température de chauffage prédéterminée pour une première durée prédéterminée pour obtenir un premier matériau intermédiaire ;
après l'obtention du premier matériau intermédiaire, la connexion d'une sortie du réservoir chauffant à une entrée d'un réservoir de cuisson,
l'alimentation du premier matériau intermédiaire présent dans le réservoir chauffant dans le réservoir de cuisson, et
la déconnexion de la sortie du réservoir chauffant de l'entrée du réservoir de cuisson ;
l'agitation du premier matériau intermédiaire dans le réservoir de cuisson (200, 620) pour une deuxième durée prédéterminée pour l'obtention d'un deuxième matériau intermédiaire ;
après l'obtention du deuxième matériau intermédiaire, la connexion d'une sortie du réservoir de cuisson à une entrée d'un réservoir de refroidissement (300, 630),
l'alimentation du deuxième matériau intermédiaire présent dans le réservoir de cuisson dans le réservoir de refroidissement, et
la déconnexion de la sortie du réservoir de cuisson de l'entrée du réservoir de refroidissement, et
l'agitation et le refroidissement du deuxième matériau intermédiaire dans le réservoir de refroidissement pour une troisième durée prédéterminée,
et l'obtention d'un produit final à base de particules et sa fabrication.

2. Procédé selon la revendication 1, dans lequel la température de chauffage prédéterminée est comprise entre 200°C et 350°C ; la première durée prédéterminée est comprise entre une heure et trois heures.

3. Procédé selon la revendication 1, dans lequel une température de refroidissement du réservoir de refroidissement est comprise entre 50°C et 100°C ; la troisième durée prédéterminée est comprise entre une heure et deux heures.

4. Procédé selon la revendication 1, dans lequel la deuxième durée prédéterminée est comprise entre une heure et deux heures.

5. Procédé selon la revendication 1, dans lequel la première durée prédéterminée est supérieure ou égale à la deuxième durée prédéterminée, la deuxième durée prédéterminée est supérieure ou égale à zéro, ou la deuxième durée prédéterminée est supérieure ou égale à la troisième durée prédéterminée.

6. Procédé selon la revendication 1, dans lequel dans l'étape d'alimentation, le matériau à traiter est alimenté dans le réservoir chauffant en lots à chaque durée prédéterminée, la durée prédéterminée est supérieure ou égale à la somme de la première durée prédéterminée et d'une durée pour effectuer le procédé de connexion de la sortie du réservoir chauffant à l'entrée du réservoir de cuisson et de déconnexion de la sortie du réservoir chauffant de l'entrée du réservoir de cuisson.

7. Système de production automatique de particules à trois réservoirs, comprenant un réservoir chauffant (100, 610), un réservoir de cuisson (200, 620), un réservoir de refroidissement (300, 630), un dispositif d'alignement (650), et un module de contrôle (640) couplé électriquement au réservoir chauffant, au réservoir de cuisson, au réservoir de refroidissement, au dispositif d'alignement, respectivement ;
le module de contrôle est configuré pour envoyer un signal d'alimentation au réservoir chauffant durant l'arrêt du réservoir chauffant, et alimenter du matériau à traiter dans le réservoir chauffant en lots ;
le réservoir chauffant est configuré pour chauffer et agiter le matériau dans le réservoir chauffant à une température de chauffage prédéterminée pour une première durée prédéterminée pour obtenir un premier matériau intermédiaire ;
après l'obtention du premier matériau intermédiaire, le module de contrôle est configuré pour envoyer un premier signal d'alimentation au dispositif d'alignement et au réservoir de cuisson, le dispositif d'alignement est configuré pour connecter une sortie du réservoir chauffant à une entrée du réservoir de cuisson selon le premier signal d'alimentation, le réservoir de cuisson est configuré pour recevoir le premier matériau intermédiaire alimenté par l'entrée selon le premier signal d'alimentation ;
après que le premier matériau intermédiaire a été alimenté, le module de contrôle est configuré pour envoyer un premier signal de déconnexion au dispositif d'alignement, le dispositif d'alignement est configuré pour déconnecter la sortie du réservoir chauffant de l'entrée du réservoir de cuisson selon le premier signal de déconnexion ;
le réservoir de cuisson est configuré pour agiter le premier matériau intermédiaire dans le réservoir de cuisson pour une deuxième durée prédéterminée pour obtenir un deuxième matériau intermédiaire ;
après l'obtention du deuxième matériau intermédiaire, le module de contrôle est configuré pour envoyer un deuxième signal d'alimentation au dispositif d'alignement et au réservoir de refroidissement, le dispositif d'alignement est configuré pour connecter une sortie du réservoir de cuisson à une entrée du réservoir de refroidissement selon le deuxième signal d'alimentation, le réservoir de refroidissement est configuré pour recevoir le deuxième matériau intermédiaire alimenté par l'entrée selon le deuxième signal d'alimentation ;
après que le deuxième matériau intermédiaire a été alimenté, le module de contrôle est configuré pour envoyer un deuxième signal de déconnexion au dispositif d'alignement, le dispositif d'alignement est configuré pour déconnecter la sortie du réservoir de cuisson de l'entrée du réservoir de refroidissement selon le deuxième signal de déconnexion ;
le réservoir de refroidissement est configuré pour agiter le deuxième matériau intermédiaire dans le réservoir de refroidissement pour une troisième durée prédéterminée pour obtenir un produit final à base de particules et sa fabrication.

8. Système selon la revendication 7, dans lequel le module de contrôle envoie le signal d'alimentation à chaque durée prédéterminée, la durée prédéterminée est supérieure ou égale à la somme de la première durée prédéterminée et d'une durée pour effectuer le procédé de connexion de la sortie du réservoir chauffant à l'entrée du réservoir de cuisson et de déconnexion de la sortie du réservoir chauffant de l'entrée du réservoir de cuisson.

9. Système selon la revendication 7, dans lequel le dispositif d'alignement (640) comprend :
un premier rail (621) disposé au-dessous du réservoir de cuisson, le réservoir de cuisson étant déplaçable le long du premier rail ; et
un premier pilote de mouvement monté sur le réservoir de cuisson, après réception des premier et deuxième signaux d'alimentation envoyé par le module de contrôle, le premier pilote de mouvement conduit le réservoir de cuisson à se déplacer le long du premier rail vers le réservoir chauffant ou à se déplacer vers le réservoir de refroidissement pour effectuer une connexion ; après réception des premier et deuxième signaux de déconnexion envoyés par le module de contrôle, le premier pilote de mouvement conduit le réservoir de cuisson à se déplacer le long du premier rail en s'éloignant du réservoir chauffant ou à se déplacer en s'éloignant du réservoir de refroidissement pour effectuer une déconnexion.

10. Système selon la revendication 7, dans lequel le dispositif d'alignement comprend :
un premier palier rotatif (622) monté verticalement sous le réservoir de cuisson, entraîné par le premier palier rotatif, le réservoir de cuisson est capable de pivoter horizontalement autour d'une ligne centrale perpendiculaire à un plan horizontal, et
un premier pilote rotatif monté sur le réservoir de cuisson, après réception des premier et deuxième signaux d'alimentation envoyés par le module de contrôle, le premier pilote rotatif conduit le réservoir de cuisson à pivoter autour de la ligne centrale perpendiculaire au plan horizontal, connectant ainsi le réservoir de cuisson au réservoir chauffant ou au réservoir de refroidissement, qui est situé sur une circonférence de pivotement du réservoir de cuisson ; après réception du premier et du deuxième signal de déconnexion envoyés par le module de contrôle, le premier pilote rotatif conduit le réservoir de cuisson à pivoter autour de la ligne centrale perpendiculaire au plan horizontal, déconnectant ainsi le réservoir de cuisson du réservoir chauffant ou du réservoir de refroidissement, qui est situé sur une circonférence de pivotement du réservoir de cuisson.

11. Système selon la revendication 9, dans lequel le dispositif d'alignement comprend en outre :
un deuxième rail (631) disposé au-dessous du dispositif de refroidissement, le réservoir de refroidissement étant déplaçable le long du deuxième rail ; et
un deuxième pilote de mouvement monté sur le réservoir de refroidissement, après réception du deuxième signal d'alimentation envoyé par le module de contrôle, le deuxième pilote de mouvement conduit le réservoir de refroidissement à se déplacer le long du deuxième rail vers le réservoir de cuisson ou en s'éloignant du réservoir de cuisson pour effectuer une connexion entre le réservoir de refroidissement et le réservoir de cuisson; après réception du deuxième signal de déconnexion envoyés par le module de contrôle, le deuxième pilote de mouvement conduit le réservoir de refroidissement à se déplacer le long du deuxième rail en s'éloignant du réservoir de cuisson pour effectuer une déconnexion du réservoir de refroidissement et du réservoir de cuisson.

12. Système selon la revendication 9, dans lequel le dispositif d'alignement comprend en outre :
un deuxième palier rotatif (632) monté verticalement sous le réservoir de refroidissement,
entraîné par le palier rotatif, le réservoir de refroidissement est capable de pivoter horizontalement autour d'une ligne centrale perpendiculaire à un plan horizontal, et un deuxième pilote rotatif monté sur le réservoir de refroidissement, après réception du deuxième signal d'alimentation envoyé par le module de contrôle, le deuxième pilote rotatif conduit le réservoir de refroidissement à pivoter autour de la ligne centrale perpendiculaire au plan horizontal, connectant ainsi le réservoir de refroidissement au réservoir de cuisson ou au réservoir de refroidissement, qui est situé sur une circonférence de pivotement du réservoir de refroidissement; après réception du deuxième signal de déconnexion envoyé par le module de contrôle, le deuxième pilote rotatif conduit le réservoir de refroidissement à pivoter autour de la ligne centrale perpendiculaire au plan horizontal, déconnectant ainsi le réservoir de refroidissement du réservoir de cuisson, qui est situé sur une circonférence de pivotement du réservoir de refroidissement.
